# EUROPEAN PATENT SPECIFICATION

(11) **EP 3 012 660 B1**
(45) Date of publication and mention of the grant of the patent: **14.11.2018**
(21) Application number: 14813923.1
(22) Date of filing: 12.06.2014
(51) Int. Cl.: G01S 15/52, G01S 7/534

(54) **MOBILE-BODY DETECTION DEVICE**
VORRICHTUNG ZUR ERKENNUNG MOBILER KÖRPER
DISPOSITIF DE DÉTECTION DE CORPS MOBILE

(30) Priority: 18.06.2013 JP 2013127864
(43) Date of publication of application: 27.04.2016
(73) Proprietor: Panasonic Intellectual Property Management Co., Ltd., Osaka-shi, Osaka 540-6207 (JP)
(72) Inventor: MUGIUDA, Toru, Osaka 540-6207 (JP); GOTO, Kazushi, Osaka 540-6207 (JP)
(74) Representative: Appelt, Christian W.
(86) International application number: PCT/JP2014/003140
(87) International publication number: WO 2014/203503

(56) References cited:
- GB-A- 1 600 430
- GB-A- 2 310 720
- JP-A- H0 947 456
- JP-A- H06 294 865
- JP-A- H09 272 402
- JP-A- S63 275 917
- JP-A- 2005 142 867
- JP-A- 2007 183 182
- JP-A- 2012 220 253
- US-A1- 2005 194 553

## Description

### TECHNICAL FIELD

This invention generally relates to moving body detection devices, and more specifically relates to a moving body detection device configured to detect the presence of a moving body inside a monitoring space by emitting a continuous energy wave such as an ultrasonic wave or a radio wave into the monitoring space and detecting a frequency shift, of a reflected wave, that is generated by a movement of an object inside the monitoring space.

### BACKGROUND ART

A moving body detection device described in Document 1 (JP 2013-79855A) is illustrated as a conventional example. The conventional example described in Document 1 includes an oscillation circuit, a transmitter, a receiver, a phase detection portion, a moving body determination portion, a phase shift circuit, and the like. The oscillation circuit is configured to output an oscillation signal (hereinafter referred to as "first oscillation signal") having a frequency of several tens of kHz from two output ends separately. The transmitter receives the first oscillation signal that is outputted from one output end of the oscillation circuit, and transmits an ultrasonic wave having a frequency that is equal to the oscillation frequency (several tens of kHz) to a monitoring space. The receiver receives an ultrasonic wave that comes from the monitoring space, converts the ultrasonic wave into an electric signal (reception signal), and outputs the converted reception signal to the phase detection portion. The phase shift circuit is a circuit for shifting the phase of the first oscillation signal by n/2. Note that the oscillation signal whose phase is shifted by the phase shift circuit is referred to as a second oscillation signal.

The phase detection portion includes: a first phase detection block constituted by a mixer, a filter, and an amplification circuit; and a second phase detection block constituted by a mixer, a filter, and an amplification circuit. The mixer in the first phase detection block mixes (multiplies) the first oscillation signal and the reception signal, and thereby outputs components (signals) that are the difference and summation of frequencies of the two signals. Similarly, the mixer in the second phase detection block mixes (multiplies) the second oscillation signal and the reception signal, and thereby outputs components (signals) that are the difference and summation of frequencies of the two signals. Note that the signal (the signal to be mixed with the reception signal) that is inputted to the mixer does not necessarily need to be the oscillation signal (first oscillation signal or second oscillation signal), and may be a periodic signal whose frequency is the same as that of the oscillation signal.

The filter of the first phase detection block is constituted by a low pass filter, and only passes signals (Doppler signal and DC component signal) that are frequency difference components of the first oscillation signal and the reception signal among the two types of signals that are outputted from the mixer. Similarly, the filter of the second phase detection block is constituted by a low pass filter, and only passes signals (Doppler signal and DC component signal) that are frequency difference components of the second oscillation signal and the reception signal among the two types of signals that are outputted from the mixer. Note that the reception signal includes a signal whose frequency is shifted due to being reflected by a moving body and a signal whose frequency is not shifted due to being reflected by a stationary object. Accordingly, the frequency difference component signals include not only the Doppler signal but also a DC component signal. The amplification circuit of each of the phase detection blocks amplifies the Doppler signal that has passed through the filter thereof. Also, a high pass filter (capacitor for cutting DC) is inserted between the filter and the amplification circuit in each of the phase detection blocks. Accordingly, the DC component signal is removed from the frequency difference component signals, and only the Doppler signal is outputted from each high pass filter.

The moving body determination portion, upon determining that the Doppler signals that are amplified by the amplification circuits are signals due to a movement component, determines (detects) that a moving body exists in the monitoring space and outputs a detection signal. Note that the detection signal that is outputted from the moving body determination portion is sent to an ECU (Electronic Control Unit) of a car, and the ECU reports an intrusion of a suspicious person into the car by sounding a warning sound (car horn sound) or the like, for example.

Incidentally, the moving body detection device as described above is supplied power from a battery that is built into a car when used in an application for monitoring the inside of a parked car. However, because the battery in the car is not charged when an engine of the car stops, the power consumption of the moving body detection device is required to be reduced in order to prevent the battery from being exhausted while the car is parked. The power consumption per unit time can be reduced by operating the moving body detection device intermittently compared with a case where the device is operated continuously, for example.

However, in the case where the conventional example described in Document 1 is operated intermittently, the moving body determination portion cannot perform determination correctly in a period until the circuit operation stabilizes. On the other hand, in the case where circuits including the moving body determination portion are operated in the period until the circuit operation stabilizes, it causes a problem in that there is a decrease in the amount by which power consumption is reduced.

GB 2 310 720 A discloses an intrusion detecting apparatus for a vehicle comprising a Doppler shift signal outputting unit (60, 70), which outputs a signal in response to the Doppler shift between a reflected ultrasonic signal measured by an ultrasonic receiver (10b, 40, 50), and a transmitted ultrasonic signal from a transmitter (10a, 20, 30). A detecting means (151, 152) of the apparatus detects an illegal intrusion by a person only when it is determined that the Doppler shift signal is within a predetermined amount corresponding to the movement of a person intruding into the passenger compartment.

US 2005/0194553 A1 discloses a sensor system where pulse intervals for a carrier wave from an MW sensor (1) are varied between when the MW sensor (1) generates an alert and when the MW sensor (1) does not generate an alert. When checking a sensing area, an operator carries a receiver being able to receive a transmitted wave from the MW sensor (1), walks around an area thought to be the sensing area and checks a monitor screen of the receiver. In this way, the sensing area can be checked at hand by the operator.

GB 1 600 430 A discloses an ultrasonic type motion detector which is high in the detecting sensitivity to human movements and is low in the probability of mis-operations by other physical phenomena than the human movements.

### SUMMARY OF INVENTION

The present invention has been made in view of the above-described problems, and an object of the present invention is to provide a moving body detection device whose power consumption is reduced while suppressing a reduction in accuracy in detecting a moving body.

A moving body detection device according to an aspect of the present invention includes an oscillation circuit, a transmitter, a receiver, a phase detection portion, a moving body determination portion, and a control portion. The oscillation circuit is configured to output an oscillation signal having a predetermined frequency. The transmitter is configured to transmit to a monitoring space a continuous energy wave whose amplitude changes periodically based on the oscillation signal that is outputted from the oscillation circuit. The receiver is configured to receive a reflected wave that is generated by the continuous energy wave being reflected by an object that exists in the monitoring space, and output a reception signal. The phase detection portion is configured to mix the oscillation signal and the reception signal to obtain a Doppler signal that depends on the frequency difference between the oscillation signal and the reception signal. The moving body determination portion is configured to detect a moving body in the monitoring space by performing signal processing on the Doppler signal, and output a detection signal. The control portion is configured to periodically switch between a halt mode of causing at least the transmitter and the phase detection portion to halt and a detection mode of causing the transmitter and the phase detection portion to operate. Also, the control portion is configured to, in the detection mode, determine whether or not the Doppler signal is outputted from the phase detection portion in a period from a point of time when a predetermined waiting time elapses from a start point of the detection mode until the detection mode ends. Then, the control portion is configured to, upon determining that the Doppler signal is outputted, extend the detection mode for the transmitter and the phase detection portion and switch the moving body determination portion from a halt state in which the moving body determination portion is caused to halt, to an operating state in which the moving body determination portion is caused to operate, and upon determining that the Doppler signal is not outputted, switch to the halt mode for the transmitter and the phase detection portion.

### BRIEF DESCRIPTION OF DRAWINGS

FIG. 1 is a block diagram illustrating a moving body detection device according to an embodiment;
FIG. 2 is a time chart for describing operations of the moving body detection device according to the embodiment;
FIG. 3 is a time chart for describing the operations of the moving body detection device according to the embodiment;
FIG. 4 is a waveform diagram for describing the operations of the moving body detection device according to the embodiment;
FIG. 5 is a circuit diagram of a high pass filter in the moving body detection device according to the embodiment; and
FIG. 6 is a waveform diagram for describing the operations of the moving body detection device according to the embodiment.

### DESCRIPTION OF EMBODIMENTS

Hereinafter, a moving body detection device 100 according to an embodiment of the present invention will be described in detail with reference to the drawings. Note that although an ultrasonic wave is used as a continuous energy wave in the moving body detection device 100 of the present embodiment, similarly to the conventional example, the technical concept of the present invention can also be applied in the case where a radio wave is used instead of the ultrasonic wave.

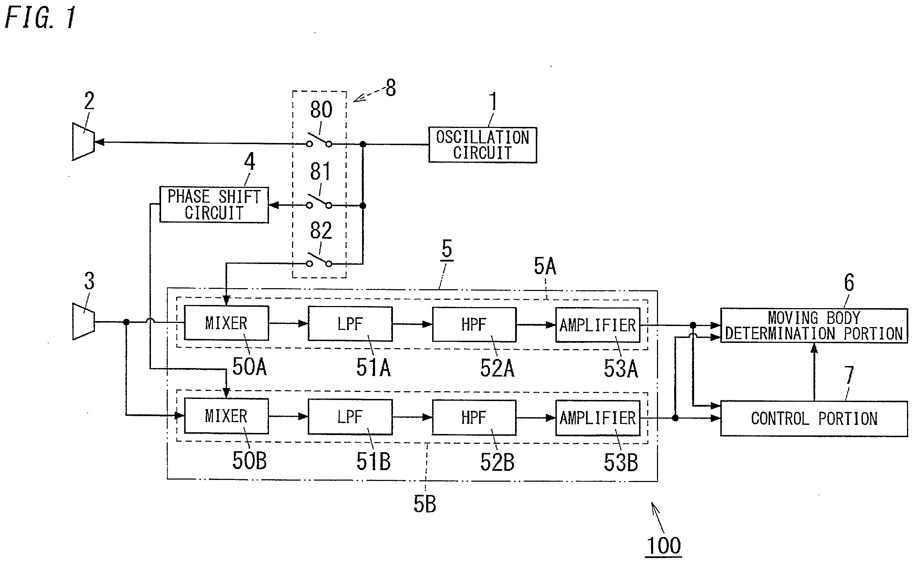

The moving body detection device 100 of the present embodiment includes an oscillation circuit 1, a transmitter 2, a receiver 3, a phase shift circuit 4, a phase detection portion 5, a moving body determination portion 6, a control portion 7, a mode switching portion 8, and the like, as shown in FIG. 1. The oscillation circuit 1 is configured to output a first oscillation signal (sine wave signal) having a frequency of several tens of kHz. The transmitter 2 is configured to receive the first oscillation signal that is outputted from the oscillation circuit 1 and then transmit an ultrasonic wave having a frequency that is equal to the oscillation frequency (several tens of kHz) to a monitoring space. The receiver 3 is configured to receive an ultrasonic wave that comes from the monitoring space, convert the ultrasonic wave into an electric signal (reception signal), and output the converted reception signal to the phase detection portion 5. The phase shift circuit 4 is a circuit for shifting the phase of the first oscillation signal by π/2. Note that the oscillation signal whose phase is shifted by the phase shift circuit 4 is referred to as a second oscillation signal.

The phase detection portion 5 includes a first phase detection block 5A and a second phase detection block 5B. The first phase detection block 5A is constituted by a mixer 50A, a low pass filter 51A, a high pass filter 52A, and an amplifier 53A. The second phase detection block 5B is constituted by a mixer 50B, a low pass filter 51B, a high pass filter 52B, and an amplifier 53B.

The mixer 50A in the first phase detection block 5A mixes (multiplies or adds) the first oscillation signal and the reception signal, and thereby outputs components (signals) that are the difference and summation of frequencies of the two signals. Similarly, the mixer 50B in the second phase detection block 5B mixes (multiplies or adds) the second oscillation signal and the reception signal, and thereby outputs components (signals) that are the difference and summation of frequencies of the two signals. Note that the signal (the signal to be mixed with the reception signal) that is inputted to the mixers 50A and 50B does not necessarily need to be the oscillation signal (first oscillation signal or second oscillation signal), and may be a periodic signal whose frequency is the same as that of the oscillation signal.

The low pass filter (LPF) 51A in the first phase detection block 5A only passes signals (Doppler signal and DC component signal) that are frequency difference components of the first oscillation signal and the reception signal among the two types of signals that are outputted from the mixer 50A. Similarly, the LPF 51B in the second phase detection block 5B only passes signals (Doppler signal and DC component signal) that are frequency difference components of the second oscillation signal and the reception signal among the two types of signals that are outputted from the mixer 50B. In other words, the LPFs 51A and 51B each only pass frequency components that are equal to or less than a first cutoff frequency that is lower than the frequency of the oscillation signal (first oscillation signal or second oscillation signal). Note that the reception signal includes a signal whose frequency is shifted due to being reflected by a moving body and a signal whose frequency is not shifted due to being reflected by a stationary object. Accordingly, the frequency difference component signals include not only the Doppler signal but also the DC component signal.

Also, the high pass filters (HPFs) 52A and 52B respectively only pass frequency components that are greater than or equal to a predetermined cutoff frequency from the output signals of the respective LPFs 51A and 51B. In other words, HPFs 52A and 52B respectively only pass frequency components that are greater than or equal to respective second cutoff frequencies that are lower than the respective first cutoff frequencies of the LPFs 51A and 51B. Accordingly, the DC component signal is removed from the frequency difference component signals, and only the Doppler signal is outputted from each of the HPFs 52A and 52B. Note that the second cutoff frequencies of the HPFs 52A and 52B are preferably set to a frequency corresponding to the moving speed of a moving body, which is a detection target (frequency of several tens of Hz in the case where the moving body is a person, for example).

The moving body determination portion 6, upon determining that the signals (Doppler signals) that are respectively amplified by the amplifiers 53A and 53B are signals due to a movement component, determines (detects) that a moving body exists in the monitoring space and outputs a detection signal. Note that the determination processing performed by the moving body determination portion 6 is conventionally known, as disclosed also in Document 1, and thus detailed description thereof will be omitted. Note that the detection signal that is outputted from the moving body determination portion 6 is sent to an ECU (Electronic Control Unit) of a car, for example. The ECU, upon receiving the detection signal, reports an intrusion of a suspicious person into the car by sounding a warning sound (car horn sound) or the like, for example.

The mode switching portion 8 includes switches 80, 81, and 82 that are respectively inserted between an output end of the oscillation circuit 1 and an input end of the transmitter 2, between the output end of the oscillation circuit 1 and an input end of the phase shift circuit 4, and between the output end of the oscillation circuit 1 and an input end of the mixer 50A. That is, when the mode switching portion 8 is off (all the switches 80, 81, and 82 are off), the transmitter 2, the phase shift circuit 4, and the mixers 50A and 50B are each in a halt state. On the other hand, when the mode switching portion 8 is on (all the switches 80, 81, and 82 are on), the transmitter 2, the phase shift circuit 4, and the mixers 50A and 50B are each in an operating state. If the transmitter 2, the phase shift circuit 4, and the mixers 50A and 50B are in the halt state, the power consumption of the moving body detection device 100 of the present embodiment is greatly reduced compared with a case where the transmitter 2, the phase shift circuit 4, and the mixers 50A and 50B are in the operating state.

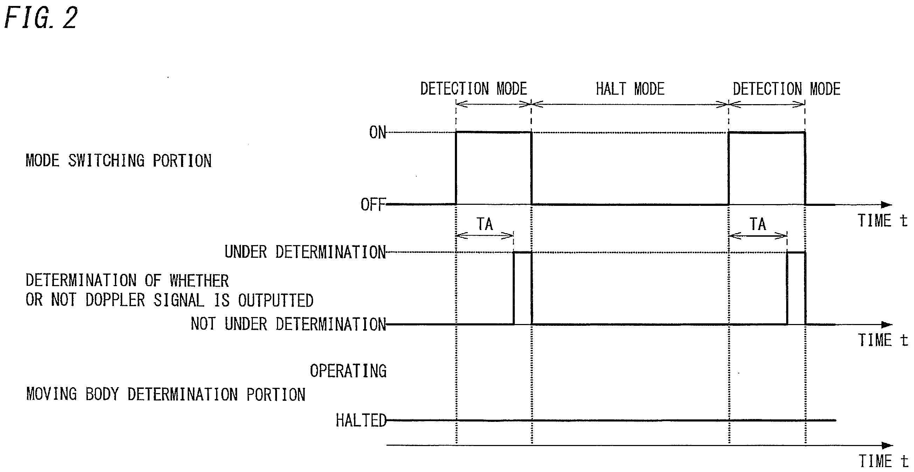

The control portion 7 is configured to control the mode switching portion 8, and operates such that a halt mode of causing the mode switching portion 8 to be turned off and a detection mode of causing the mode switching portion 8 to be turned on are periodically switched (refer to FIG. 2). Also, the control portion 7 includes a function of switching the moving body determination portion 6 to one of an operating state and a halt state. The power consumption of the moving body determination portion 6 is greatly reduced in the halt state compared with that in the operating state.

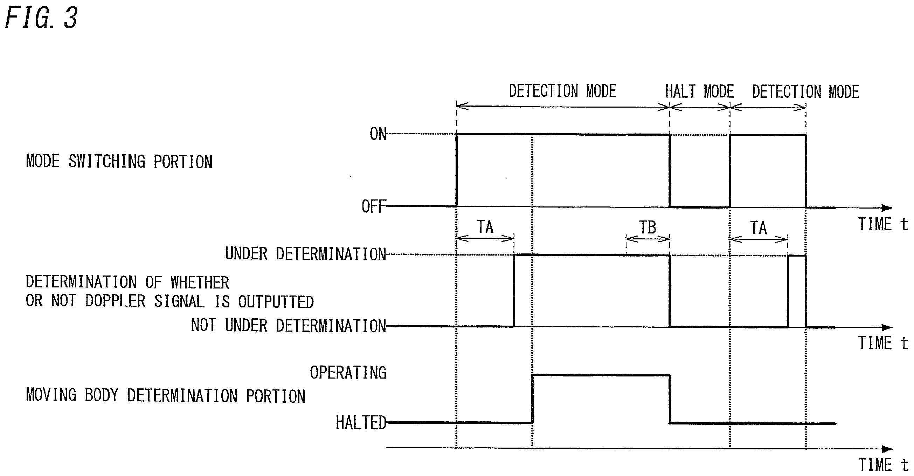

Next, operations of the moving body detection device 100 of the present embodiment, mainly the control operation of the control portion 7, will be described with reference to time charts in FIGS. 2 and 3.

The control portion 7 does nothing from a time point of starting the detection mode by turning on the mode switching portion 8 until a predetermined waiting time TA elapses, and determines whether or not the Doppler signal is outputted (presence or absence of the Doppler signal) from the phase detection portion 5 when the waiting time TA elapses, as shown in FIG. 2.

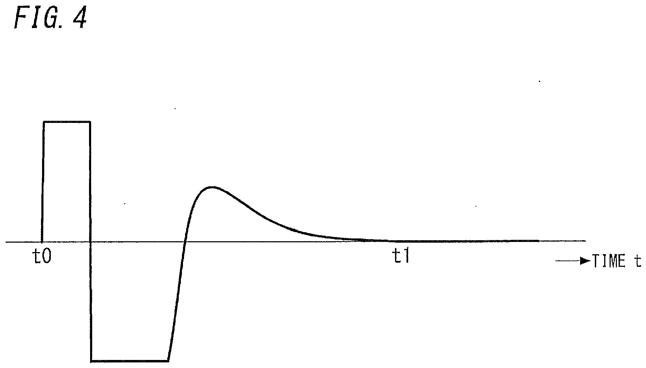

Here, a fluctuation occurs in each of the output signals of the HPFs 52A and 52B due to a DC component in a period immediately after turning on the mode switching portion 8 (time t = t0) (refer to a square wave like portion in FIG. 4). After the fluctuations due to the DC component have settled (after time t = t1), if a moving body does not exist in the monitoring space, the signal levels of the output signals of the HPFs 52A and 52B each settle to a constant value (refer to FIG. 4). On the other hand, if a moving body exists in the monitoring space, the signal levels of the output signals of the respective HPFs 52A and 52B change in accordance with the speed of the moving body, and the amplifiers 53A and 53B each output the Doppler signal.

Accordingly, if the signal level of at least one of the output signals, among the output signals of the two amplifiers 53A and 53B, is greater than or equal to a lower limit value (a value larger than the above constant value), the control portion 7 determines that the Doppler signal is outputted. Also, if the signal level of the output signal of each of the amplifiers 53A and 53B is less than the lower limit value, the control portion 7 determines that the Doppler signal is not outputted.

The control portion 7, upon determining that the Doppler signal is not outputted, switches from the detection mode to the halt mode by turning off the mode switching portion 8, and switches from the halt mode to the detection mode by again turning on the mode switching portion 8 at a point of time when a predetermined halt period has elapsed (refer to FIG. 2). Note that the control portion 7 causes the moving body determination portion 6 to be in the halt state, unless the Doppler signal is determined to be outputted in the detection mode.

On the other hand, the control portion 7, upon determining that the Doppler signal is outputted, continues the detection mode, and switches the moving body determination portion 6 from the halt state to the operating state (refer to FIG. 3). Then, the moving body determination portion 6 performs signal processing on the two Doppler signals that are outputted from the phase detection portion 5, and determines (detects) whether or not a moving body exists. Note that the control portion 7 continues to determine whether or not the Doppler signal is outputted for the duration of the detection mode. When the period during which the Doppler signal is determined to not be outputted reaches a predetermined period TB (≥ t1- t0), the control portion 7 switches to the halt mode by turning off the mode switching portion 8 and switches the moving body determination portion 6 to the halt state.

As described above, the moving body detection device 100 of the present embodiment causes some portion of the circuits (phase shift circuit 4 and phase detection portion 5) to operate intermittently, and thereby power consumption can be reduced. Furthermore, in the moving body detection device 100 of the present embodiment, the control portion 7 does not perform determination of a moving body by the moving body determination portion 6 at the time when the mode is switched from the halt mode to the detection mode. The control portion 7 waits until the circuit operation stabilizes, and thereafter causes the moving body determination portion 6 to operate only when there is a possibility that a moving body exists (in the case of determining that the Doppler signal is outputted). Therefore, the moving body detection device 100 of the present embodiment can reduce the possibility that the moving body determination portion 6 erroneously determines (erroneously detects) that a moving body does or does not exist. That is, the power consumption of the moving body detection device 100 of the present embodiment can be reduced while suppressing a reduction in accuracy in detecting a moving body.

Incidentally, in the moving body detection device 100 of the present embodiment, the phase detection portion 5 is constituted by the first phase detection block 5A and the second phase detection block 5B. The first phase detection block 5A includes the mixer 50A, the LPF 51A, the HPF 52A, and the amplifier 53A. Similarly, the second phase detection block 5B includes the mixer 50B, the LPF 51B, the HPF 52B, and the amplifier 53B. Furthermore, the phase of the oscillation signal (second oscillation signal) that is inputted to the mixer 50B in the second phase detection block 5B is shifted by n/2 relative to the oscillation signal (first oscillation signal) that is inputted to the mixer 50A in the first phase detection block 5A.

That is to say, depending on the timing at which the output signal of the amplifier 53A is observed, the signal level of the output signal may possibly be small. However, in the moving body detection device 100 of the present embodiment, the two phase detection blocks 5A and 5B generate the Doppler signal at the same time in parallel, and the phases of the signals (first oscillation signal and second oscillation signal) that are to be mixed with the reception signal in the respective phase detection blocks 5A and 5B are shifted from each other. Therefore, in the moving body detection device 100 of the present embodiment, whether or not the Doppler signal is outputted can be determined quickly and reliably, because, when one of the output signals of the two amplifiers 53A and 53B decreases, the other output signal increases.

That is, in order to find an inflection point (peak value) of the output signal of one amplifier 53A (or amplifier 53B), a period corresponding to a half cycle of the output signal is needed at maximum. However, in order to find an inflection point of one of the output signals of the two amplifiers 53A and 53B, only a period corresponding to quarter cycle of the output signal is needed at maximum. Therefore, the period needed for the control portion 7 to determine whether or not the Doppler signal is outputted can be reduced. Here, the square root of the sum of squares of the two output signals corresponds to the amplitude of the Doppler signal. Accordingly, the control portion 7 may determine whether or not the Doppler signal is outputted by comparing the sum of squares of the two output signals with a threshold, instead of separately comparing the output signals of the amplifiers 53A and 53B with a lower limit value. As a result of determining whether or not the Doppler signal is outputted based on the sum of squares of the output signals of the amplifiers 53A and 53B, whether or not the Doppler signal is outputted can be determined in a shorter period of time, because the frequency (phase) of the output signal attributed to the speed of the moving body does not need to be considered.

Also, as described above, in the case where whether or not the Doppler signal is outputted is determined by only the signal levels of the output signals of the amplifiers 53A and 53B, the control portion 7 may possibly erroneously determine that the Doppler signal is outputted due to noise caused by loud sounds or an impact. Accordingly, the control portion 7 may measure the frequency and duration time of each of the output signals of the amplifiers 53A and 53B, and determine that the Doppler signal is outputted when the measurement value of the frequency is in a predetermined range corresponding to the moving speed of a moving body and the measurement value of the duration time is greater than or equal to a predetermined value. Accordingly, erroneous determination by the control portion 7 as to whether or not the Doppler signal is outputted due to noise caused by loud sounds or an impact can be suppressed. Note that the duration time refers to a time period during which the output signal of the amplifier 53A or 53B is outputted continuously.

Incidentally, it is preferable that the period (period from time t = t0 to time t = t1 in FIG. 4) until the circuit operation stabilizes be as short as possible. It is conceivable to increase the cutoff frequencies (second cutoff frequencies) of the HPFs 52A and 52B as a method for shortening the period. For example, in the case where the HPFs 52A and 52B are each configured by a differentiation circuit constituted by a capacitor (capacitance "C") and a resistor (resistance value "R"), the cutoff frequency fc can be expressed as fc = 1/(2πRC), and as a result the cutoff frequency fc increases by reducing the resistance value "R" of the resistor.

However, the lower limit value of the detectable moving speed increases as the cutoff frequencies fc of the HPFs 52A and 52B are increased, and therefore the accuracy in detecting a slow-moving moving body (a body that moves slowly) decreases. Accordingly, in order to secure the accuracy in detecting a slow-moving moving body, it is preferable to decrease the cutoff frequencies fc of the HPFs 52A and 52B.

Thus, it is preferable to make the cutoff frequencies fc of the HPFs 52A and 52B variable. At the start point of the detection mode, the cutoff frequencies fc of the HPFs 52A and 52B may be set relatively high in order to stabilize the circuit operation in a short period, and thereafter the cutoff frequencies fc of the HPFs 52A and 52B may be set relatively low.

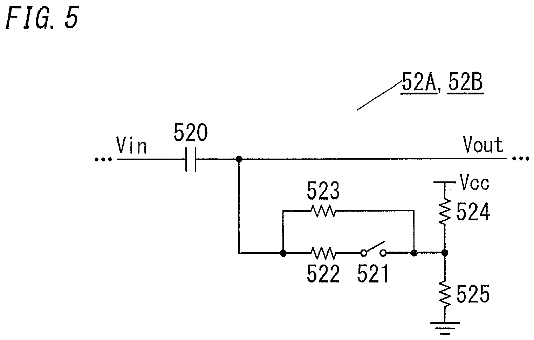

For example, the HPFs 52A and 52B may be each constituted by a capacitor 520, a plurality of resistors 522 to 525, and a switch 521 that is turned on and off by the control portion 7, as shown in FIG. 5. The resistor 522 is electrically connected in series to the switch 521, and furthermore the resistor 523 is electrically connected in parallel to a series circuit of the resistor 522 and the switch 521. A connection point of the two resistors 522 and 523 is electrically connected to one end on an output side of the capacitor 520, and a connection point of the switch 521 and the resistor 523 is electrically connected to a midpoint of a series circuit of the resistors 524 and 525. The two resistors 524 and 525 are electrically connected between a controll power supply Vcc and ground. That is, a first end of the two ends of the series circuit of the two resistors 524 and 525 is electrically connected to the controll power supply Vcc, and a second end of the two ends is electrically connected to ground.

In each of the HPFs 52A and 52B, an input voltage is expressed as Vin and an output voltage is expressed as Vout. In the case where the Doppler signal is not outputted, the output voltage Vout (voltage after time t = t1, in FIG. 4) after the operation stabilizes serves as a reference voltage value Va. Note that the reference voltage value Va is expressed as Va = Vcc1×R4/(R3+R4). Here, "R3" is a resistance value of the resistor 524, and "R4" is a resistance value of the resistor 525. Also, "Vcc1" is a power supply voltage of the controll power supply Vcc.

Also, the time constant τ1 of each of the HPFs 52A and 52B in a state (on state) in which the switch 521 is closed is expressed as t1 = C×(Ra+Rb), where Ra = R1×R2/(R1+R2) and Rb = R3×R4/(R3+R4). Here, "R1" is a resistance value of the resistor 523, and "R2" is a resistance value of the resistor 522. Also, "Ra" is a resistance value of a combined resistance of the resistors 522 and 523, and "Rb" is a resistance value of a combined resistance of the resistors 524 and 525.

Here, if the resistance value "R2" of the resistor 522 is sufficiently smaller than the resistance value "R1" of the resistor 523, the resistance value "Ra" of the combined resistance is regarded as being substantially equal to the resistance value "R2" of the resistor 522. Therefore, the time constant τ1 can be regarded as τ1 = C×(R2+Rb).

On the other hand, the time constant τ2 of each of the HPFs 52A and 52B in a state (off state) in which the switch 521 is open is expressed as τ2 = C×(R1+Rb). Assuming that the resistance value "R1" is 1M Ω, the resistance value "R2" is 1k Ω, and each of the resistance values "R3" and "R4" is 100k Ω, for example, the resistance value "Rb" of the combined resistance will be 50k Ω, and the time constant τ2 will be approximately 20 times the time constant τ1.

Accordingly, the control portion 7 decreases the time constant τ (τ = τ1) of each of the HPFs 52A and 52B by turning on the switch 521 along with turning on the mode switching portion 8 so as to switch to the detection mode. Then, when the waiting time TA elapses, the control portion 7 increases the time constant τ (τ = τ2) of each of the HPFs 52A and 52B by turning off the switch 521.

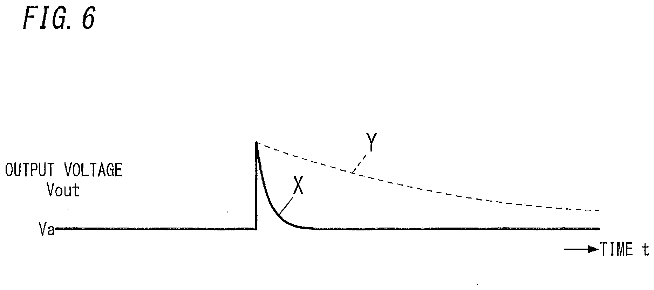

Here, in the case where the time constant τ of each of the HPFs 52A and 52B in the waiting time TA is "τ2", a very long period of time is required until the output voltage Vout settles to the reference voltage value Va as shown by the broken line Y in FIG. 6. However, if the time constant τ of each of the HPFs 52A and 52B in the waiting time TA is switched to "τ1" as described above, the period of time until the output voltage Vout settles to the reference voltage value Va can be greatly reduced, as shown by the solid line X in FIG. 6. Furthermore, because the output voltage Vout, when each of the operations of the HPFs 52A and 52B stabilizes settles to the reference voltage value Va regardless of whether the time constant τ is switched to any of "τ1" and "τ2", a change of the output voltage Vout caused by the change of the resistance value can be suppressed.

Note that, although the HPFs 52A and 52B are each constituted by an analog circuit in the moving body detection device 100 of the present embodiment, similar operations can be performed by configuring each of the HPFs 52A and 52B by a digital circuit (digital filter) and adjusting filter coefficients.

Also, although the moving body detection device 100 of the present embodiment is configured such that the HPFs 52A and 52B are provided downstream of the respective LPFs 51A and 51B, the configuration may be such that the LPFs 51A and 51B are provided downstream of the respective HPFs 52A and 52B.

As described above, the moving body detection device 100 of the present embodiment has the following first feature.

According to the first feature, the moving body detection device 100 includes an oscillation circuit (oscillation means) 1, a transmitter (transmission means) 2, a receiver (reception means) 3, a phase detection portion (phase detection means) 5, a moving body determination portion (detection means) 6, and a control portion (control means) 7. The oscillation circuit 1 is configured to output an oscillation signal having a predetermined frequency. The transmitter 2 is configured to transmit to a monitoring space a continuous energy wave whose amplitude changes periodically based on the oscillation signal that is outputted from the oscillation means. The receiver 3 is configured to receive a reflected wave that is generated by the continuous energy wave being reflected by an object that exists in the monitoring space, and output a reception signal. The phase detection portion 5 is configured to mix the oscillation signal and the reception signal to obtain a Doppler signal that depends on the frequency difference between the oscillation signal and the reception signal. The moving body determination portion 6 is configured to detect a moving body in the monitoring space by performing signal processing on the Doppler signal, and output a detection signal. The control portion 7 is configured to control each of the means, and periodically switch between a halt mode of causing at least the transmitter 2 and the phase detection portion 5 to halt and a detection mode of causing the transmitter 2 and the phase detection portion 5 to operate. The phase detection portion 5 includes a mixer (50A, 50B), a low pass filter (51A, 51B), a high pass filter (52A, 52B), and an amplifier (53A, 53B). The mixer (50A, 50B) is configured to mix the oscillation signal and the reception signal. The low pass filter (51A, 51B) is configured to pass only a frequency component, of the output signal of the mixer (50A, 50B), that is lower than the frequency of the oscillation signal. The high pass filter (52A, 52B) has a cutoff frequency that is lower than the cutoff frequency of the low pass filter (51A, 51B), and is configured to filter the output signal of the low pass filter (51A, 51B). The amplifier (53A, 53B) is configured to amplify the output signal of the high pass filter (52A, 52B). Also, the phase detection portion 5 is configured to regard the output signal of the amplifier (53A, 53B) as the Doppler signal. The control portion 7 is configured to, in the detection mode, extend the detection mode and cause the moving body determination portion 6 to operate if the Doppler signal is outputted from the phase detection portion 5 in a period from a point of time when a predetermined waiting time TA elapses from the start point of the detection mode until the detection mode ends. Also, the control portion 7 is configured to not extend the detection mode and switch to the halt mode if the Doppler signal is not outputted from the phase detection portion 5.

In other words, the moving body detection device 100 includes an oscillation circuit 1, a transmitter 2, a receiver 3, a phase detection portion 5, a moving body determination portion 6, and a control portion 7. The oscillation circuit 1 is configured to output an oscillation signal having a predetermined frequency. The transmitter 2 is configured to transmit a continuous energy wave whose amplitude changes periodically based on the oscillation signal that is outputted from the oscillation circuit 1 to a monitoring space. The receiver 3 is configured to receive a reflected wave that is generated by the continuous energy wave being reflected by an object that exists in the monitoring space, and output a reception signal. The phase detection portion 5 is configured to mix the oscillation signal and the reception signal to obtain a Doppler signal that depends on the frequency difference between the oscillation signal and the reception signal. The moving body determination portion 6 is configured to detect a moving body in the monitoring space by performing signal processing on the Doppler signal, and outputs a detection signal. The control portion 7 is configured to periodically switch between a halt mode of causing at least the transmitter 2 and the phase detection portion 5 to halt and the detection mode of causing the transmitter 2 and the phase detection portion 5 to operate. Also, the control portion 7 is configured to determine, in the detection mode, whether or not the Doppler signal is outputted from the phase detection portion 5 in a period from a point of time when a predetermined waiting time TA elapses from the start point of the detection mode until the detection mode ends. Then, the control portion 7 is configured to, upon determining that the Doppler signal is outputted, extend the detection mode and cause the moving body determination portion 6 to operate, and upon determining that the Doppler signal is not outputted, switch to the halt mode.

Also, the moving body detection device 100 of the present embodiment may have the following second feature in addition to the first feature.

According to the second feature, the phase detection portion 5 includes the mixer (50A, 50B), the low pass filter (51A, 51B), the high pass filter (52A, 52B), and the amplifier (53A, 53B). The mixer (50A, 50B) is configured to mix the oscillation signal and the reception signal. The low pass filter (51A, 51B) is configured to pass frequency components that is less than or equal to a first cutoff frequency that is lower than the frequency of the oscillation signal. The high pass filter (52A, 52B) is configured to pass frequency components that are greater than or equal to a second cutoff frequency that is lower than the first cutoff frequency of the low pass filter (51A, 51B). The amplifier (53A, 53B) is configured to amplify the output signal that has passed through the low pass filter (51A, 51B) and the high pass filter (52A, 52B). Also, the phase detection portion 5 is configured to regard the output signal of the amplifier (53A, 53B) as the Doppler signal.

Also, the moving body detection device 100 of the present embodiment may have the following third feature in addition to the first or second feature.

According to the third feature, the control portion 7 is configured to, after extending the detection mode, if the period in which the Doppler signal is not outputted from the phase detection portion 5 continues for a predetermined period TB, switch to the halt mode.

In other words, the control portion 7 is configured to, in a period during which the detection mode is extended, if the period in which the Doppler signal is determined to not be outputted from the phase detection portion 5 continues for a predetermined period TB, cause the moving body determination portion 6 to halt, and switch to the halt mode.

Also, the moving body detection device 100 of the present embodiment may have the following fourth feature in addition to any of the first to third features.

According to the fourth feature, the control portion 7 is configured to extend the detection mode when the signal level of the output signal of the amplifier (53A, 53B) is greater than or equal to a predetermined threshold, and switch to the halt mode when the signal level is less than the threshold.

In other words, the control portion 7 is configured to determine that the Doppler signal is outputted when the signal level of an output signal of the phase detection portion 5 is greater than or equal to a predetermined threshold, and determine that the Doppler signal is not outputted when the signal level is less than the threshold.

Also, the moving body detection device 100 of the present embodiment may have the following fifth feature in addition to the second feature.

According to the fifth feature, the phase detection portion 5 includes two or more of the mixers 50A and 50B, two or more of the low pass filters 51A and 51B, two or more of the high pass filters 52A and 52B, and two or more of the amplifiers 53A and 53B. The two or more mixers 50A and 50B are configured such that signals that are to be mixed with the reception signal in the respective two or more mixers 50A and 50B have an oscillation frequency that is equal to that of the oscillation signal, and the signals have different phases from each other. Also, the control portion 7 is configured to, in the detection mode, extend the detection mode if the Doppler signal is outputted from at least one of the amplifiers 53A and 53B, and not extend the detection mode and switch to the halt mode if the Doppler signal is not outputted from any of the amplifiers 53A and 53B.

In other words, the phase detection portion 5 includes two or more of the mixers 50A and 50B, two or more of the low pass filters 51A and 51B, two or more of the high pass filters 52A and 52B, and two or more of the amplifiers 53A and 53B. The oscillation signals that are respectively inputted to the two or more mixers 50A and 50B have different phases from each other. In the detection mode, the control portion 7 is configured to determine that the Doppler signal is outputted if the output signal is outputted from at least one of the amplifiers 53A and 53B. Also, the control portion 7 is configured to determine that the Doppler signal is not outputted if the output signal is not outputted in any of the amplifiers 53A and 53B.

Also, the moving body detection device 100 of the present embodiment may have the following sixth feature in addition to the fifth feature.

According to the sixth feature, the phase detection portion 5 includes two of the mixers 50A and 50B, two of the low pass filters 51A and 51B, two of the high pass filters 52A and 52B, and two of the amplifiers 53A and 53B. The two mixers 50A and 50B are configured such that the signals that are to be mixed with the reception signal in the respective two mixers 50A and 50B have an oscillation frequency that is equal to that of the oscillation signal, and the signals have different phases from each other by π/2.

In other words, the phase detection portion 5 includes two of the mixers 50A and 50B, two of the low pass filters 51A and 51B, two of the high pass filters 52A and 52B, and two of the amplifiers 53A and 53B. The oscillation signals that are respectively inputted to the two mixers 50A and 50B have different phases from each other by π/2.

Also, the moving body detection device 100 of the present embodiment may have the following seventh feature in addition to the sixth feature.

According to the seventh feature, the control portion 7 is configured to extend the detection mode when the sum of squares of the signal levels of the output signals that are respectively outputted from the two amplifiers 53A and 53B is greater than or equal to a predetermined reference value, and switch to the halt mode when the sum is less than the reference value.

In other words, the control portion 7 is configured to, when the sum of squares of the signal levels of the output signals that are respectively outputted from the two amplifiers 53A and 53B is greater than or equal to the predetermined reference value, determine that the Doppler signal is outputted, and when the sum of squares is less than the reference value, determine that the Doppler signal is not outputted.

Also, the moving body detection device 100 of the present embodiment may have the following eighth feature in addition to any of the first to seventh features.

According to the eighth feature, the control portion 7 is configured to measure the frequency and the duration time of the output signal of the amplifier (53A, 53B), and extend the detection mode when the measurement value of the frequency is in a predetermined range corresponding to the moving speed of a moving body and the measurement value of the duration time is greater than or equal to a predetermined value.

In other words, the control portion 7 is configured to measure the frequency and the duration time of the output signal of the phase detection portion 5, and determine that the Doppler signal is outputted when the measurement value of the frequency of the output signal is in a predetermined range corresponding to the moving speed of a moving body and the measurement value of the duration time is greater than or equal to a predetermined value.

Also, the moving body detection device 100 of the present embodiment may have the following ninth feature in addition to any of the second, and fifth to seventh features.

According to the ninth feature, the control portion 7 is configured to variably control the second cutoff frequency of the high pass filter (52A, 52B). The control portion 7 is configured to, in the detection mode, set the second cutoff frequency of the high pass filter (52A, 52B) that is applied in a period until the waiting time TA elapses to be higher than the second cutoff frequency of the high pass filter (52A, 52B) that is applied in a period after the waiting time TA elapses.

In the moving body detection device 100 of the present embodiment, the control portion 7 determines, in the detection mode, whether or not the Doppler signal is outputted from the phase detection portion 5 in a period from a point of time when a predetermined waiting time TA elapses from the start point of the detection mode until the detection mode ends. Then, the control portion 7, upon determining that the Doppler signal is outputted, extends the detection mode and causes the moving body determination portion 6 to operate, and upon determining that the Doppler signal is not outputted, switches to the halt mode. Accordingly, the moving body detection device 100 of the present embodiment has an effect that the power consumption can be reduced while suppressing a reduction in accuracy in detecting a moving body.

## Claims

1. A moving body detection device (100) comprising:
an oscillation circuit (1) configured to output an oscillation signal having a predetermined frequency;
a transmitter (2) configured to transmit to a monitoring space a continuous energy wave whose amplitude changes periodically based on the oscillation signal that is outputted from the oscillation circuit (1);
a receiver (3) configured to receive a reflected wave that is generated by the continuous energy wave being reflected by an object that exists in the monitoring space, and output a reception signal;
a phase detection portion (5) configured to mix the oscillation signal and the reception signal to obtain a Doppler signal that depends on a frequency difference between the oscillation signal and the reception signal;
a moving body determination portion (6) configured to detect a moving body in the monitoring space by performing signal processing on the Doppler signal, and output a detection signal; and
a control portion (7) configured to periodically switch between a halt mode of causing at least the transmitter (2) and the phase detection portion (5) to halt and a detection mode of causing the transmitter (2) and the phase detection portion (5) to operate,
the control portion (7) being configured to, in the detection mode, determine whether or not the Doppler signal is outputted from the phase detection portion (5) in a period from a point of time when a predetermined waiting time (TA) elapses from a start point of the detection mode until the detection mode ends, **characterised by** the control portion (7) being configured to, upon determining that the Doppler signal is outputted, extend the detection mode for the transmitter (2) and the phase detection portion (5) and switch the moving body determination portion (6) from a halt state in which the moving body determination portion (6) is caused to halt, to an operating state in which the moving body determination portion (6) is caused to operate, and upon determining that the Doppler signal is not outputted, switch to the halt mode for the transmitter (2) and the phase detection portion (5).

2. The moving body detection device (100) according to claim 1,
wherein the moving body determination portion (6) is caused to be in the halt state unless the Doppler signal is determined to be outputted in the detection mode.

3. The moving body detection device (100) according to claim 1,
wherein the phase detection portion (5) comprises:
a mixer (50A,50B) configured to mix the oscillation signal and the reception signal;
a low pass filter (51A,51B) configured to pass only a frequency component that is less than or equal to a first cutoff frequency that is lower than a frequency of the oscillation signal;
a high pass filter (52A,52B) configured to pass only a frequency component that is greater than or equal to a second cutoff frequency that is lower than the first cutoff frequency of the low pass filter (51A,51B); and
an amplifier (53A,53B) configured to amplify an output signal that has passed through the low pass filter (51A,51B) and the high pass filter (52A,52B), and
the phase detection portion (5) is configured to regard an output signal of the amplifier (53A,53B) as the Doppler signal.

4. The moving body detection device (100) according to claim 3, wherein the phase detection portion (5) comprises two or more of the mixers (50A,50B), two or more of the low pass filters (51A,51B), two or more of the high pass filters (52A,52B), and two or more of the amplifiers (53A,53B),
the oscillation signals that are respectively inputted to the two or more mixers (50A,50B) have different phases from each other, and
the control portion (7) is configured to, in the detection mode, determine that the Doppler signal is outputted if the output signal is outputted from at least one of the amplifiers (53A,53B), and determine that the Doppler signal is not outputted if the output signal is not outputted from any of the amplifiers (53A,53B).

5. The moving body detection device (100) according to claim 4, wherein the phase detection portion (5) comprises two of the mixers (50A,50B), two of the low pass filters (51A,51B), two of the high pass filters (52A,52B), and two of the amplifiers (53A,53B), and
the oscillation signals that are respectively inputted to the two mixers (50A,50B) have different phases from each other by π/2.

6. The moving body detection device (100) according to claim 5, wherein the control portion (7) is configured to, when a sum of squares of signal levels of output signals that are respectively outputted from the two amplifiers (53A,53B) is greater than or equal to a predetermined reference value, determine that the Doppler signal is outputted, and when the sum of squares is less than the reference value, determine that the Doppler signal is not outputted.

7. The moving body detection device (100) according to claim 3, wherein the control portion (7) is configured to variably control the second cutoff frequency of the high pass filter (52A,52B), and
the control portion (7) is configured to, in the detection mode, set the second cutoff frequency of the high pass filter (52A,52B) that is applied in a period until the waiting time (TA) elapses to be higher than the second cutoff frequency of the high pass filter (52A,52B) that is applied in a period after the waiting time (TA) elapses.

8. The moving body detection device (100) according to claim 1, wherein the control portion (7) is configured to, in a period during which the detection mode is extended, if the period in which the Doppler signal is determined to not be outputted from the phase detection portion (5) continues for a predetermined period (TB), cause the moving body determination portion (6) to halt, and switch to the halt mode.

9. The moving body detection device (100) according to claim 1, wherein the control portion (7) is configured to determine that the Doppler signal is outputted when a signal level of an output signal of the phase detection portion (5) is greater than or equal to a predetermined threshold, and determine that the Doppler signal is not outputted when the signal level is less than the threshold.

10. The moving body detection device (100) according to claim 1, wherein the control portion (7) is configured to measure a frequency and a duration time of an output signal of the phase detection portion (5) and determine that the Doppler signal is outputted when a measurement value of the frequency of the output signal is in a predetermined range corresponding to a moving speed of the moving body and a measurement value of the duration time is greater than or equal to a predetermined value.

## Patentansprüche

1. Vorrichtung (100) zur Erkennung mobiler Körper, aufweisend:
einen Oszillationsschaltkreis (1), der dazu eingerichtet ist, ein Oszillationssignal auszugeben, das eine vorbestimmte Frequenz aufweist;
einen Sender (2), der dazu eingerichtet ist, eine fortlaufende Energiewelle zu einem Überwachungsraum zu senden, deren Amplitude sich auf der Grundlage des Oszillationssignals, das von dem Oszillationsschaltkreis (1) ausgegeben ist, periodisch ändert;
einen Empfänger (3), der dazu eingerichtet ist, eine reflektierte Welle, die durch die fortlaufende Energiewelle erzeugt wird, die durch ein in dem Überwachungsraum vorhandenes Objekt reflektiert wird, zu empfangen und ein Empfangssignal auszugeben;
einen Phasenerfassungsabschnitt (5), der dazu eingerichtet ist, das Oszillationssignal und das Empfangssignal zu mischen, um ein Dopplersignal zu erhalten, das von einer Frequenzdifferenz zwischen dem Oszillationssignal und dem Empfangssignal abhängt;
einen Abschnitt (6) zur Bestimmung eines mobilen Körpers, der dazu eingerichtet ist, einen mobilen Körper in dem Überwachungsraum zu erfassen, indem eine Signalverarbeitung an dem Dopplersignal durchgeführt wird, und ein Erfassungssignal auszugeben; und
einen Steuerabschnitt (7), der dazu eingerichtet ist, periodisch zwischen einem Haltmodus, in dem mindestens der Sender (2) und der Phasenerfassungsabschnitt (5) dazu veranlasst werden, anzuhalten, und einem Erfassungsmodus umzuschalten, in dem der Sender (2) und der Phasenerfassungsabschnitt (5) veranlasst werden, zu arbeiten,
wobei der Steuerabschnitt (7) dafür ausgelegt ist, in dem Erfassungsmodus zu bestimmen, ob das Dopplersignal von dem Phasenerfassungsabschnitt (5) in einer Zeitspanne ausgehend von einem Zeitpunkt, in dem eine vorbestimmte Wartezeit (TA) von einem Startpunkt des Erfassungsmodus verstreicht, bis der Erfassungsmodus endet, ausgegeben wird oder ob nicht,
**dadurch gekennzeichnet, dass** der Steuerabschnitt (7) dafür ausgelegt ist, bei Bestimmung, dass das Dopplersignal ausgegeben wird, den Erfassungsmodus für den Sender (2) und den Phasenerfassungsabschnitt (5) zu erweitern und den Abschnitt (6) zur Bestimmung eines mobilen Körpers von einem Haltzustand, in dem der Abschnitt (6) zur Bestimmung eines mobilen Körpers veranlasst wird, zu halten, in einen Arbeitszustand umzuschalten, in dem der Abschnitt (6) zur Bestimmung eines mobilen Körpers veranlasst wird, zu arbeiten, und bei Bestimmung, dass das Dopplersignal nicht ausgegeben ist, in den Haltmodus für den Sender (2) und den Phasenerfassungsabschnitt (5) umzuschalten.

2. Vorrichtung (100) zur Erkennung mobiler Körper nach Anspruch 1,
wobei der Abschnitt (6) zur Bestimmung eines mobilen Körpers veranlasst wird, sich in dem Haltzustand zu befinden, sofern nicht bestimmt wird, dass das Dopplersignal in dem Erfassungsmodus ausgegeben wird.

3. Vorrichtung (100) zur Erkennung mobiler Körper nach Anspruch 1,
wobei der Phasenerfassungsabschnitt (5) aufweist:
einen Mischer (50A, 50B), der dazu eingerichtet ist, das Oszillationssignal und das Empfangssignal zu mischen;
ein Tiefpassfilter (51A, 51B), das dazu eingerichtet ist, lediglich eine Frequenzkomponente durchzulassen, die kleiner oder gleich einer ersten Grenzfrequenz ist, die niedriger ist als eine Frequenz des Oszillationssignals;
ein Hochpassfilter (52A, 52B), das dazu eingerichtet ist, lediglich eine Frequenzkomponente durchzulassen, die größer oder gleich einer zweiten Grenzfrequenz ist, die niedriger ist als die erste Grenzfrequenz des Tiefpassfilters (51A, 51B); und
einen Verstärker (53A, 53B), der dazu eingerichtet ist, ein Ausgangssignal, das das Tiefpassfilter (51A, 51B) und das Hochpassfilter (52A, 52B) durchlaufen hat, zu verstärken, und
der Phasenerfassungsabschnitt (5) dazu eingerichtet ist, ein Ausgangssignal des Verstärkers (53A, 53B) als das Dopplersignal zu berücksichtigen.

4. Vorrichtung (100) zur Erkennung mobiler Körper nach Anspruch 3,
wobei der Phasenerfassungsabschnitt (5) zwei oder mehrere der Mischer (50A, 50B), zwei oder mehrere der Tiefpassfilter (51A, 51B), zwei oder mehrere der Hochpassfilter (52A, 52B) und zwei oder mehrere der Verstärker (53A, 53B) aufweist, die Oszillationssignale, die jeweils in die zwei oder mehreren Mischer (50A, 50B) eingegeben werden, Phasen aufweisen, die sich unterscheiden, und
der Steuerabschnitt (7) dazu eingerichtet ist, in dem Erfassungsmodus zu bestimmen, dass das Dopplersignal ausgegeben wird, falls das Ausgangssignal von mindestens einem der Verstärker (53A, 53B) ausgegeben wird, und zu bestimmen, dass das Dopplersignal nicht ausgegeben wird, falls das Ausgangssignal von keinem der Verstärker (53A, 53B) ausgegeben wird.

5. Vorrichtung (100) zur Erkennung mobiler Körper nach Anspruch 4,
wobei der Phasenerfassungsabschnitt (5) zwei der Mischer (50A, 50B), zwei der Tiefpassfilter (51A, 51B), zwei der Hochpassfilter (52A, 52B) und zwei der Verstärker (53A, 53B) aufweist, und
die Oszillationssignale, die jeweils in die zwei Mischer (50A, 50B) eingegeben sind, Phasen haben, die sich durch π/2 unterscheiden.

6. Vorrichtung (100) zur Erkennung mobiler Körper nach Anspruch 5, wobei der Steuerabschnitt (7) dazu eingerichtet ist, wenn eine Quadratsumme von Signalpegeln von Ausgangssignalen, die jeweils von den zwei Verstärkern (53A, 53B) ausgegeben sind, größer oder gleich einem vorbestimmten Referenzwert ist, zu bestimmen, dass das Dopplersignal ausgegeben wird, und wenn die Quadratsumme kleiner als der Referenzwert ist, zu bestimmen, dass das Dopplersignal nicht ausgegeben wird.

7. Vorrichtung (100) zur Erkennung mobiler Körper nach Anspruch 3,
wobei der Steuerabschnitt (7) dazu eingerichtet ist, die zweite Grenzfrequenz des Hochpassfilters (52A, 52B) variabel zu steuern, und
der Steuerabschnitt (7) dazu eingerichtet ist, in dem Erfassungsmodus die zweite Grenzfrequenz des Hochpassfilters (52A, 52B), die in einer Zeitspanne angewendet wird, bis die Wartezeit (TA) verstreicht, höher einzustellen als die zweite Grenzfrequenz des Hochpassfilter (52A, 52B), die in einer Zeitspanne angewendet wird, nachdem die Wartezeit (TA) verstreicht.

8. Vorrichtung (100) zur Erkennung mobiler Körper nach Anspruch 1, wobei der Steuerabschnitt (7) dazu eingerichtet ist, in einer Zeitspanne, während der der Erfassungsmodus verlängert ist, falls die Zeitspanne, in der bestimmt wird, dass das Dopplersignal von dem Phasenerfassungsabschnitt (5) nicht ausgegeben wird, für eine vorbestimmte Zeitspanne (TB) andauert, den Abschnitt (6) zur Bestimmung eines mobilen Körpers zu veranlassen zu halten, und in den Haltmodus umschalten.

9. Vorrichtung (100) zur Erkennung mobiler Körper nach Anspruch 1, wobei der Steuerabschnitt (7) dazu eingerichtet ist, zu bestimmen, dass das Dopplersignal ausgegeben wird, wenn ein Signalpegel eines Ausgabesignals des Phasenerfassungsabschnitts (5) größer oder gleich einem vorgegebenen Schwellwert ist, und zu bestimmen, dass das Dopplersignal nicht ausgegeben wird, wenn der Signalpegel kleiner ist als der Schwellwert.

10. Vorrichtung (100) zur Erkennung mobiler Körper nach Anspruch 1, wobei der Steuerabschnitt (7) dazu eingerichtet ist, eine Frequenz und eine Zeitdauer eines Ausgabesignals des Phasenerfassungsabschnitts (5) zu erfassen und zu bestimmen, dass das Dopplersignal ausgegeben ist, wenn ein Messwert der Frequenz des Ausgangssignals in einem vorgegebenen Bereich liegt, der einer Bewegungsgeschwindigkeit des sich bewegenden Körpers entspricht, und ein Messwert der Zeitdauer größer oder gleich einem vorbestimmten Wert ist.

## Revendications

1. Dispositif de détection de corps mobile (100) comprenant :
un circuit d'oscillation (1) configuré pour produire en sortie un signal d'oscillation ayant une fréquence prédéterminée :
un émetteur (2) configuré pour émettre vers un espace de surveillance une onde d'énergie continue dont l'amplitude change périodiquement sur la base du signal d'oscillation qui est produit en sortie à partir du circuit d'oscillation (1) ;
un récepteur (3) configuré pour recevoir une onde réfléchie qui est générée par l'onde d'énergie continue réfléchie par un objet qui est présent dans l'espace de surveillance, et produire en sortie un signal de réception ;
une partie de détection de phase (5) configurée pour mélanger le signal d'oscillation et le signal de réception pour obtenir un signal Doppler qui dépend d'une différence de fréquence entre le signal d'oscillation et le signal de réception ;
une partie de détermination de corps mobile (6) configurée pour détecter un corps mobile dans l'espace de surveillance en réalisant un traitement de signal sur le signal Doppler, et produire en sortie un signal de détection ; et
une partie de commande (7) configurée pour commuter périodiquement entre un mode d'arrêt amenant au moins l'émetteur (2) et la partie de détection de phase (5) à s'arrêter et un mode de détection amenant l'émetteur (2) et la partie de détection de phase (5) à fonctionner,
la partie de commande (7) étant configurée, dans le mode de détection, pour déterminer si le signal Doppler est ou n'est pas produit en sortie par la partie de détection de phase (5) dans une période d'écoulement d'un temps d'attente prédéterminé (TA) d'un point de départ du mode de détection jusqu'à la fin du mode de détection, **caractérisé en ce que**
la partie de commande (7) est configurée, lorsqu'il est déterminé que le signal Doppler est produit en sortie, pour prolonger le mode de détection pour l'émetteur (2) et la partie de détection de phase (5) et commuter la partie de détermination de corps mobile (6) d'un état d'arrêt dans lequel la partie de détermination de corps mobile (6) est amenée à s'arrêter, à un état de fonctionnement dans lequel la partie de détermination de corps mobile (6) est amenée à fonctionner, et s'il est déterminé que le signal Doppler n'est pas produit en sortie, pour commuter en mode d'arrêt pour l'émetteur (2) et la partie de détection de phase (5).

2. Dispositif de détection de corps mobile (100) selon la revendication 1,
dans lequel la partie de détermination de corps mobile (6) est amenée à être dans l'état d'arrêt sauf s'il est déterminé que le signal Doppler est produit en sortie dans le mode de détection.

3. Dispositif de détection de corps mobile (100) selon la revendication 1,
dans lequel la partie de détection de phase (5) comprend :
un mélangeur (50A, 50B) configuré pour mélanger le signal d'oscillation et le signal de réception ;
un filtre passe-bas (51A, 51B) configuré pour laisser passer uniquement une composante de fréquence qui est inférieure ou égale à une première fréquence de coupure qui est inférieure à une fréquence du signal d'oscillation ;
un filtre passe-haut (52A, 52B) configuré pour laisser passer uniquement une composante de fréquence qui est supérieure ou égale à une seconde fréquence de coupure qui est inférieure à la première fréquence de coupure du filtre passe-bas (51A, 51B) ; et
un amplificateur (53A, 53B) configuré pour amplifier un signal de sortie qui est passé à travers le filtre passe-bas (51A, 51B) et le filtre passe-haut (52A, 52B), et
la partie de détection de phase (5) est configurée pour considérer un signal de sortie de l'amplificateur (53A, 53B) comme le signal Doppler.

4. Dispositif de détection de corps mobile (100) selon la revendication 3,
dans lequel la partie de détection de phase (5) comprend deux des mélangeurs (50A, 50B) ou plus, deux des fibres passe-bas (51A, 51B) ou plus, deux des filtres passe-haut (52A, 52B) ou plus et deux des amplificateurs (53A, 53B) ou plus,
les signaux d'oscillation qui sont respectivement entrés dans les deux mélangeurs (50A, 50B) ou plus ont des phases différentes les uns des autres, et
la partie de commande (7) est configurée, dans le mode de détection, pour déterminer que le signal Doppler est produit en sortie si le signal de sortie est produit en sortie à partir d'au moins un des amplificateurs (53A, 53B), et déterminer que le signal Doppler n'est pas produit en sortie si le signal de sortie n'est pas produit en sortie à partir d'un quelconque des amplificateurs (53A, 53B).

5. Dispositif de détection de corps mobile (100) selon la revendication 4,
dans lequel la partie de détection de phase (5) comprend deux des mélangeurs (50A, 50B), deux des filtres passe-bas (51A, 51B), deux des filtres passe-haut (52A, 52B) et deux des amplificateurs (53A, 53B), et
les signaux d'oscillation qui sont entrés respectivement dans les deux mélangeurs (50A, 50B) ont des phases différentes l'un de l'autre de π/2.

6. Dispositif de détection de corps mobile (100) selon la revendication 5, dans lequel la partie de commande (7) est configurée, lorsqu'une somme des carrés des niveaux de signaux des signaux de sortie qui sont respectivement produits en sortie à partir des deux amplificateurs (53A, 53B) est supérieure ou égale à une valeur de référence prédéterminée, pour déterminer que le signal Doppler est produit en sortie, et lorsque la somme des carrés est inférieure à la valeur de référence, pour déterminer que le signal Doppler n'est pas produit en sortie.

7. Dispositif de détection de corps mobile (100) selon la revendication 3,
dans lequel la partie de commande (7) est configurée pour commander de manière variable la seconde fréquence de coupure du filtre passe-haut (52A, 52B), et
la partie de commande (7) est configurée, dans le mode de détection, pour définir la seconde fréquence de coupure du filtre passe-haut (52A, 52B) qui est appliquée dans une période jusqu'à écoulement du temps d'attente (TA) à une valeur plus élevée que la seconde fréquence de coupure du filtre passe-haut (52A, 52B) qui est appliquée dans une période après écoulement du temps d'attente (TA).

8. Dispositif de détection de corps mobile (100) selon la revendication 1, dans lequel la partie de commande (7) est configurée, dans une période pendant laquelle le mode de détection est prolongé, si la période dans laquelle il est déterminé que le signal Doppler n'est pas produit en sortie par la partie de détection de phase (5) se poursuit pendant une période prédéterminée (TB), pour amener la partie de détermination de corps mobile (6) à s'arrêter, et commuter en mode d'arrêt.

9. Dispositif de détection de corps mobile (100) selon la revendication 1, dans lequel la partie de commande (7) est configurée pour déterminer que le signal Doppler est produit en sortie lorsqu'un niveau de signal d'un signal de sortie de la partie de détection de phase (5) est supérieur ou égal à un seuil prédéterminé, et déterminer que le signal Doppler n'est pas produit en sortie lorsque le niveau de signal est inférieur au seuil.

10. Dispositif de détection de corps mobile (100) selon la revendication 1, dans lequel la partie de commande (7) est configurée pour mesurer une fréquence et une durée d'un signal de sortie de la partie de détection de phase (5) et déterminer que le signal Doppler est produit en sortie lorsqu'une valeur de mesure de la fréquence du signal de sortie est dans une plage prédéterminée correspondant à une vitesse mobile du corps mobile et une valeur de mesure de la durée est supérieure ou égale à une valeur prédéterminée.
